# EUROPEAN PATENT SPECIFICATION

(11) **EP 1 510 457 B1**
(45) Date of publication and mention of the grant of the patent: **13.02.2008**
(21) Application number: 04024156.4
(22) Date of filing: 11.10.2004
(51) Int. Cl.: B64D 47/06, F21S 8/10

(54) **Anti collision light for aircraft**
Antikollisionsleuchte für Luftfahrzeuge
Feu anticollision pour aéronefs

(43) Date of publication of application: 02.03.2005
(73) Proprietor: Flight Components AG, 8184 Bachenbülach (CH)
(72) Inventor: Brenner, Paul E., 6047 Kastanienbaum (CH); Hirni, Heini E., 8614 Sulzbach (CH); Schedler, Thomas, 8165 Schleinikon (CH)
(74) Representative: Blum, Rudolf Emil

(56) References cited:
- DE-U1- 20 311 169
- US-A- 4 935 665
- US-A- 2004 085 779
- US-A1- 2002 101 189
- US-A1- 2003 193 807
- US-A1- 2004 075 575
- US-B1- 6 367 949
- PATENT ABSTRACTS OF JAPAN vol. 2000, no. 05, 14 September 2000 (2000-09-14) & JP 2000 045237 A (TOSHIBA LIGHTING &TECHNOLOGY CORP), 15 February 2000 (2000-02-15)

## Description

The invention relates to an anti collision light for aircraft and in particular to such a light with light emitting diodes as light sources.

The international regulations for airborne aircraft (e.g. by "EASA" = European Aviation Safety Agency or "FAR" = Federal Aviation Regulations) with fixed wings or rotary wings require an external lighting which in addition to the position lights requires so called anti collision lights which must radiate by day and by night above a certain minimal intensity indicated in Candela. According to EASA the anti collision lights must e.g. radiate in red ("aviation red") or in white ("aviation white") with a predetermined intensity and colour, and also within a given solid angle.

An usual source for flashing anti collision lights is e.g. provided by Xenon flashing tubes which emit a light spectrum that appears white to the human eye, and which is provided with a red filter (typically red glass) for operation in the red spectral region. It is known as well to provide anti collision lights with light emitting diodes (LEDs) as light sources. DE-U-203 11 169, which shows all the features of the preamble of the independent claim 1, shows a signal light for vehicles with a LED-panel and a common reflector above said panel. JP-A-2000 045237 shows a marker light of similar construction. US-A-4 935 665 shows a car brake light with diodes arranged in hollows on an metallic board and reflectors arranged above said hollows.

The present invention aims to provide a LED anti collision light with a compact design and providing ease of manufacturing.

This goal is met by an anti collision light according to claim 1.

The common plane allows an automated well defined mounting of the LEDs and an equal reflection angle for all the light beams emitting from the diodes on the reflecting means. These means are preferably common to several or all light emitting diodes.

In a preferred embodiment a second plane with diodes having their own reflecting means is provided. It is further preferred to provide the planes by circuit boards on which the diodes are mounted and by which the voltage and current is fed directly to the diodes. It is preferred in another embodiment to have fifth reflecting means by a reflecting layer on the plane in an area or in areas around some or each of said diodes.

Further implementations, advantages and applications of the invention can be derived from the dependent claims and from the following description made with the help of the drawings. Therein,
Figure 1 shows a side view of a first embodiment;
Figure 2 shows a perspective view of this embodiment;
Figure 3 shows a top view,
Figure 4 shows an exploded view of the embodiment;
Figure 5 shows an inner module of the anti collision light with two planes in a side view;
Figure 6 shows a perspective view of the module;
Figure 7 shows a top view of the module,
Figure 8 shows an exploded view of the module;
Figure 9 shows a mounted LED;
Figure 10 shows a circuit diagram of the LEDs;
Figure 11 shows another embodiment of a module in perspective view; and
Figure 12 shows the module of Figure 11 in exploded view.

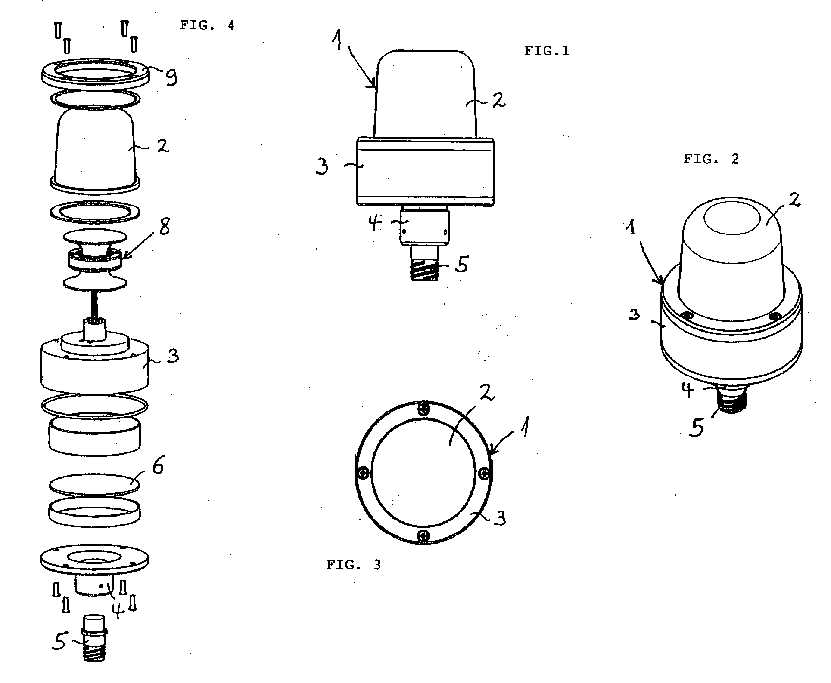

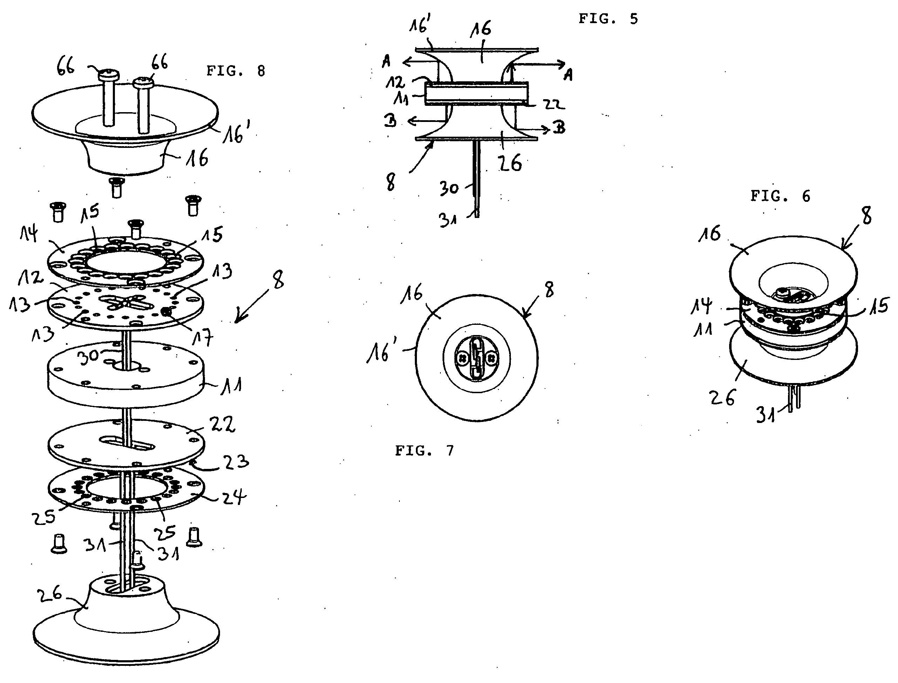

A first embodiment of an anti collision light for aircraft (hereinafter called ACL) is shown in Figures 1 - 10. Figures 1 - 3 show the ACL from the outside in different views wherein it can be seen that the ACL 1 comprises a socket part 4, 5 a main housing 3 and a transparent cover 2. Within the transparent cover 2 the module 8 with the light emitting diodes is placed but is not shown in Figures 1 - 3. The exploded view of Figure 4 shows the same elements and exposes the module 8 arranged on the housing part 3 and covered by the transparent cover 2. A ring shaped collar 9 mounts the cover 2 to the housing 3 and the module 8 is mounted to the same housing 3 as will be shown later in Figure 8. Within housing 3 the electronic components for feeding the light emitting diodes with power (low voltage dc current) can be arranged on a circuit board 6. The housing 3 is closed by a lower part 4 which can belong to the socket or which can be part of the housing 3 itself. The socket 4 and 5 can be a screw type socket as shown or any other kind of socket for mounting the ACL to the aircraft as known to the man skilled in the art.

Figures 5, 6 and 7 show the module 8 in a preferred special embodiment. In the sideview of Figure 5 a plane 12 is shown on which the light emitting diodes are arranged as can be seen in Figure 8. A reflecting means 16 in this case a parabolic reflector having a circular upper rim 16' reflects light that is emitted by light emitting diodes upwardly towards the reflecting means 16 in a sidewise manner as indicated by arrows A in Figure 5 since a number of light emitting diodes are arranged, preferably in a circle, around the lower rim 16'' of reflecting means 16. A spatial light emitting characteristic of the ACL of 360° can thus be achieved. The plane 12 and the reflecting means 16 are preferably arranged on a support 11. On the same support 11 or on another support there may be another plane 22 which faces with its back the back of plane 12 and which carries a number of light emitting diodes as well. A reflecting means 26 is then arranged above plane 22. Above means here that the light emitted by the light emitting diodes on plane 22 is emitted as well away from the plane mostly in a perpendicular direction to the plane and then falls on the reflecting means 26 and is directed sidewardly as is shown for example for a single light beam with arrows B in the same manner as for the other plane 12 with arrows A. So even if the reflecting means 26 is below plane 22 in the drawing it is here in view of the direction of the light said that reflecting means 26 is arranged above plane 22.

Exploded view of Figure 8 shows the construction of such an embodiment with two planes 12 and 22 but would be similar if only plane 12 and reflecting means 16 would be present. Plane 12 which is the basis for the light emitting diodes 13 is arranged on support 11 but could be of course held in other ways in ACL 1. Light emitting diodes 13 are arranged in a circle on plane 12 but of course could be arranged in other closed line forms for example in a rectangular form, open line forms, matrix arrangements or even in a random manner. Light emitting diodes 13 are preferably mounted directly on a plane 12 which is a circuit board that comprises the electric connections for the diodes 13. The diodes 13 are arranged as already mentioned in such a manner that their main direction of light emission is essentially perpendicular to plane 12. Diodes 13 may be arranged and mounted by automatic equipment for arranging electronic parts on printed circuit boards. Reflecting means 16, which are shown as the preferred parabolic circular rim reflector already mentioned is fixed to support 11 for example by two screws 66 shown above the reflecting means 16 and which fix as well the module 8 to the housing part 3. A printed circuit board 12' is fixed to support 11 by screws as well but could be fixed of course by any known means to the preferred support or by other known means to the housing of the ACL.

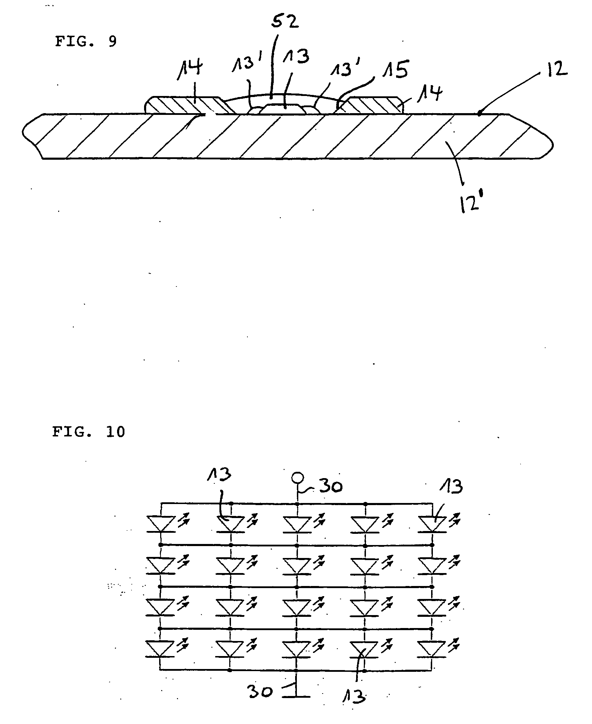

In this preferred embodiment the number of light emitting diodes is 20 but of course the number can be changed. The light emitting diodes are preferably connected electrically as shown in circuit diagram of Figure 10 and two electric connectors 30 are connecting all light emitting diodes to the electric feeding circuit which has been shown as a printed circuit board 6 in Figure 4 only but which could be of course arranged differently within the ACL. Each light emitting diode can be fed with a current of for example 0.5 to 0.8A and with a flash rate of for example 44 pulses per minute. The on-time can be for example 250 milliseconds a type of diode suited for such an ACL is for example the type MB042-SOL of red colour. As already mentioned it is preferred to arrange the light emitting diodes directly on the plane 12 which is a circuit board. Figure 9 shows an example wherein the light emitting diode chip 13 is mounted directly on printed circuit board plane 12 in known manner and bond wires 13' are connected from chip 13 directly to board 12'. It is preferred that a transparent pourable plastic mass 52 for example a silicone mass is used to protect bond wires 13' and the light emitting diode chip 13. A frame 15 forms a compartment around each diode and contains the pourable mass 52 until this mass has sufficiently hardened.

As shown, additional light reflecting means mounted on the plane 12 are arranged around each or some of the light emitting diodes 13. This can be achieved in an easy manner by having a ring around each or some of diodes 13 with light reflecting tapered sidewalls that reflect light emitted sidewardly by the diodes in a manner essentially perpendicular to plane 12. In Figure 8 a number of such third reflecting means 15 are shown by holes with tapered walls in a ring shaped plate 14 that is fixed on plane 12 in such a manner that each diode has its own reflector 15. Reflector 15 can be at the same time frame 15 of Figure 9 for pouring in said transparent mass 52. In this way most of the light emitted by diodes 13 is emitted perpendicular to plane 12 either directly by the diode or by reflection on reflecting means 15.

As another additional reflecting means 17 it is preferred to have a reflecting surface layer on plane 12 around each diode chip which can be for example a printed layer on said plane which is covered by a thin gold layer. Only the areas where the bond wires contact circuit board 12 and the printed connectors are leading from the bond wires to the contact areas of electric lines 30 on the printed circuit board (12') are of course not covered by reflector 17.

As shown here as a preferred embodiment only another plane 22 can be arranged on support 11 or in another way within the housing of ACL 1 preferably in a back to back position to the first mentioned plane 12. As can easily be seen in Figure 8 this plane 22 and reflecting means 26 are mounted in a similar manner as first plane 12 and reflecting means 16. Screws 66 can be used to fix reflector 26 as well. Electric lines 31 are feeding light emitting diodes 23 on plane 22 which diodes are not visible in Figure 8 and are therefore only indicated by arrow 23. Additional fourth reflecting means 24 with holes 25 with tapered walls and arranged at the same positions as the light emitting diodes can be present (in the same manner as reflecting means 15) for the light emitting diodes 23 as well. For those diodes the additional reflecting means 17 can be arranged as well on plane 22.

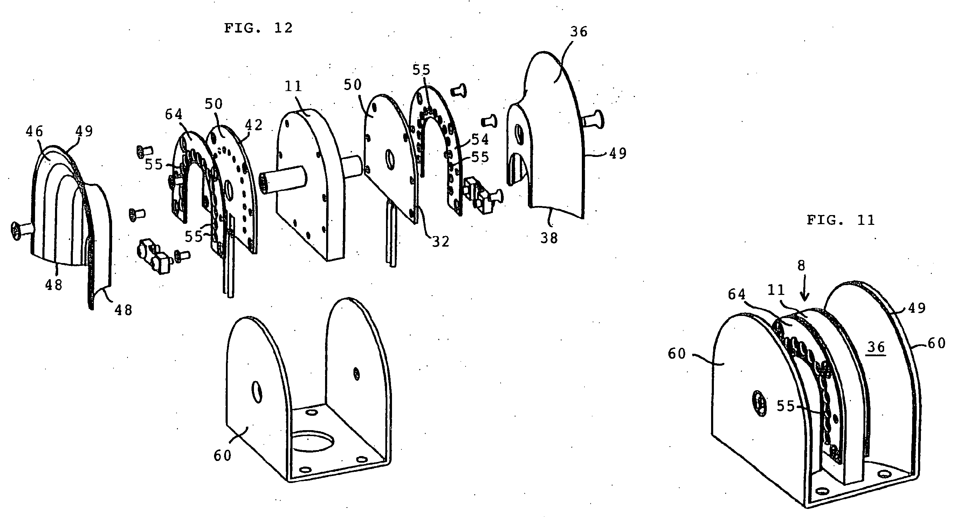

Figures 11 and 12 show another embodiment similar to the one described before but which does not emit light around a full circle (360°). Accordingly, the support 11 which is preferably used here as well is approximately U-shaped around its rim. The same holds true for circuit boards 50 with their U-shaped rims 32 and 42 and for the arrangement of the light emitting diodes. Third and fourth reflecting means 54 and 64 with holes 55 are preferably present as well. The main reflecting means 36 and 46 with their rims 38 and 48 and the U-shaped rims 49 are preferably shaped in a parabolical way as well to direct light emitted by the diodes in a sidewards manner as explained before. The module 8 of this kind which is U-shaped or shaped like a horseshoe can be arranged in a bracket 60 as shown in Figures 11 and 12. In this case as well there is a housing which is not shown in the Figures and a clear cover which protects the module.

The ACL according to the invention is not affected by vibrations as they occur on aircraft, has low weight and a very compact construction. The power consumption is low compared to conventional ACLs. The preferred embodiment with feeding circuit and led arrangement within the ACL itself is easy to mount to an airplane and enhances the above advantages. The ACL can be NVIS (Night Vision Systems) friendly without special filters due to the spectral characteristics of the LEDs used.

## Claims

1. Anti collision light (1) for aircraft comprising a number of first light emitting diodes (13) arranged on a common plane (12) and reflecting means (16) arranged above the plane for reflecting light emitting from the light emitting diodes essentially perpendicular to said plane in a sidewards direction, wherein the reflecting means (16) is a reflector common to several or all light emitting diodes and wherein the plane (12) is a circuit board on which light emitting diode chips are directly mounted, **characterized in that** some or each first light emitting diodes (13) are surrounded by additional reflecting means (15) belonging to the first number of light emitting diodes (13), directing light emitted sidewardly by the light emitting diode or the diodes in a direction essentially perpendicular to said plane (12), wherein said additional reflecting means (15) are mounted on the plane such that each first light emitting diode (13) has its own reflector (15) which at the same time constitutes a frame for pouring in a transparent mass (52).

2. Anti collision light according to claim 1 comprising a second plane (22) common to a second number of light emitting diodes (23) arranged thereon, the first and second planes (12, 22) being arranged essentially coplanar in a back to back facing manner, and a second reflecting means (26) arranged above the second plane for reflecting light emitting from the light emitting diodes of the second number of light emitting diodes essentially perpendicular to the second plane in a sidewards direction, and in particular wherein the second reflecting means (26) is a reflector common to several or all light emitting diodes of said second number of light emitting diodes.

3. Anti collision light according to claim 2 wherein the second plane (22) is a circuit board on which light emitting diode chips are directly mounted.

4. Anti collision light according to claim 2, wherein some or each light emitting diodes of second number of diodes (23), or groups of several of said light emitting diodes together, are surrounded by additional reflecting means (25) belonging to said second number of light emitting diodes (23), directing light emitted sidewardly by the light emitting diode or the diodes in a direction essentially perpendicular to said plane (22).

5. Anti collision light according to claim 4 wherein said additional reflecting means (25) for said second number of light emitting diodes (23) are mounted on the second plane (22).

6. Anti collision light according to claim 4 or 5, respectively, wherein said additional reflecting means (15, 25) are ring shaped parts having holes with tapered, reflecting sidewalls, the holes being arranged correspondingly with the positions of said light emitting diodes on said plane or said planes, respectively.

7. Anti collision light according to one of claims 1 to 6 wherein the light emitting diodes are arranged along a closed line on the plane or planes, respectively, in particular in a circle, or are arranged along an open line on said plane or said planes, respectively, in particular in a horseshoe-like shape, or are arranged in a matrix-like shape.

8. Anti collision light according to one of claims 1 to 7 wherein further additional reflecting means (17) are provided by a reflecting layer on the plane (12) or the planes (12, 22), respectively, for some or for each of said light emitting diodes, respectively.

9. Anti collision light according to one of claims 1 to 8 wherein said reflecting means (16, 26) above said plane (12) or said planes (12, 22) are parabolically shaped and are provided with a circular outer rim (16').

10. Anti collision light according to claim 9 wherein said plane (12) or said planes (12, 22) are circular plates or circuit boards, respectively.

11. Anti collision light according to claims 1 to 8 wherein said reflecting means (36, 46) above said plane (32) or said planes (32, 42) are parabolically shaped and are provided with two separate rims (38, 48) extending from said plane (32) or said planes (32, 42), respectively, and with an outer rim (49) which is U-shaped.

12. Anti collision light according to claim 11 wherein said plane (32) or said planes (32, 42) are plates or circuit boards, respectively with a U-shaped rim (50) extending form a linear base (51).

13. Anti collision light according to one of claims 1 to 12 wherein the light emitting diodes are lensless.

14. Anti collision light according to one of claims 1 to 13 wherein the light emitting diodes (13) are covered by a light transparent mass (52), in particular by a pourable silicone mass.

15. Anti collision light according to claim 14 wherein said reflecting means (15, 25) arranged around said light emitting diodes, and in particular said third or fourth reflecting means, respectively, form a frame for said mass.

16. Anti collision light according to claim 2 wherein a support (11) is provided for said back to back facing planes, which are spaced apart by said support.

17. Anti collision light according to one of claims 2 to 16 wherein said planes and said reflecting means above said planes are arranged along a common longitudinal axis and in particular in the same axis as a socket (4, 5) of the anti collision light.

18. Anti collision light according to one of claims 2 to 17 wherein said planes and said reflecting means above said planes are arranged along a common axis and placed within a U-shaped bracket(60).

19. Anti collision light according to one of claims 1 to 18 wherein the light emitting diodes and a circuit board (6) for the electrical feeding circuit for the light emitting diodes are arranged within the housing of the anti collision light (2,3) and in particular the circuit board is arranged coplanar to the plane (12) or planes (12,22), respectively.

## Patentansprüche

1. Antikollisionslicht (1) für ein Flugzeug umfassend eine Anzahl von ersten Leuchtdioden (13), die auf einer gemeinsamen Ebene (12) angeordnet sind, und ein Reflektionsmittel (16), das oberhalb der Ebene angeordnet ist, um von den Leuchtdioden im Wesentlichen senkrecht zu der genannten Ebene abgegebenes Licht in eine seitliche Richtung zu reflektieren, wobei das Reflektionsmittel (16) ein mehreren oder allen Leuchtdioden gemeinsamer Reflektor ist und wobei die Ebene (12) eine Platine ist, auf welcher Leuchtdioden-Chips direkt montiert sind, **dadurch gekennzeichnet, dass** einige oder jede der ersten Leuchtdioden (13) von einem zusätzlichen Reflektionsmittel (15) umgeben sind, welches zu der ersten Anzahl von Leuchtdioden (13) gehört, das von der Leuchtdiode oder den Leuchtdioden seitlich abgegebenes Licht in eine Richtung im Wesentlichen senkrecht zu der genannten Ebene (12) lenkt, wobei das genannte zusätzliche Reflektionsmittel (15) derart auf der Ebene montiert ist, dass jede erste Leuchtdiode (13) ihren eigenen Reflektor (15) hat, der dabei einen Rahmen zum Eingiessen einer transparenten Masse (52) bildet.

2. Antikollisionslicht gemäss Anspruch 1, umfassend eine zweite Ebene (22), die einer zweiten Anzahl von Leuchtdioden (23), die auf dieser angeordnet sind, gemeinsam ist, wobei die erste und die zweite Ebene (12, 22) im Wesentlichen koplanar in einer Rücken-an-Rücken stehenden Weise angeordnet sind, und ein zweites Reflektionsmittel (26), das oberhalb der zweiten Ebene angeordnet ist, um von den Leuchtdioden der zweiten Anzahl von Leuchtdioden im Wesentlichen senkrecht zu der zweiten Ebene abgegebenes Licht in eine seitliche Richtung zu reflektieren, und insbesondere wobei das zweite Reflektionsmittel (26) ein Reflektor ist, der mehreren oder allen Leuchtdioden der genannten zweiten Anzahl von Leuchtdioden gemeinsam ist.

3. Antikollisionslicht gemäss Anspruch 2, wobei die zweite Ebene (22) eine Platine ist, auf welcher Leuchtdiodenchips direkt montiert sind.

4. Antikollisionslicht gemäss Anspruch 2, wobei einige oder jede der Leuchtdioden der zweiten Anzahl von Dioden (23), oder Gruppen von mehreren von den genannten Leuchtdioden zusammen, von einem zusätzlichen Reflektionsmittel (25) umgeben sind, welches zu der genannten zweiten Anzahl von Leuchtdioden (23) gehört und seitlich von der Leuchtdiode oder den Leuchtdioden abgegebenes Licht in eine Richtung im Wesentlichen senkrecht zu der genannten Ebene (22) lenkt.

5. Antikollisionslicht gemäss Anspruch 4, wobei das genannte zusätzliche Reflektionsmittel (25) für die genannte zweite Anzahl von Leuchtdioden (23) auf der zweiten Ebene (22) montiert ist.

6. Antikollisionslicht gemäss Anspruch 4 oder 5, wobei die genannten zusätzlichen Reflektionsmittel (15, 25) ringförmige Teile sind, die Löcher mit konischen, reflektierenden Seitenwänden haben, wobei die Löcher mit den Positionen der genannten Leuchtdioden korrespondierend auf der genannten Ebene bzw. den genannten Ebenen angeordnet sind.

7. Antikollisionslicht gemäss einem der Ansprüche 1 bis 6, wobei die Leuchtdioden entlang einer geschlossenen Linie auf der Ebene bzw. den Ebenen angeordnet sind, insbesondere in einem Kreis, oder entlang einer offenen Linie auf der genannten Ebene bzw. den genannten Ebenen angeordnet sind, insbesondere in einer hufeisenähnlichen Form, oder in einer matrizenähnlichen Form angeordnet sind.

8. Antikollisionslicht gemäss einem der Ansprüche 1 bis 7, wobei ein weiteres zusätzliches Reflektionsmittel (17) durch eine reflektierende Schicht auf der Ebene (12) bzw. den Ebenen (12, 22) für einige bzw. für jede der genannten Leuchtdioden bereitgestellt ist.

9. Antikollisionslicht gemäss einem der Ansprüche 1 bis 8, wobei die genannten Reflektionsmittel (16, 26) oberhalb der genannten Ebene (12) oder der genannten Ebenen (12, 22) parabolisch geformt und mit einem kreisförmigen äusseren Rand (16') versehen sind.

10. Antikollisionslicht gemäss Anspruch 9, wobei die genannte Ebene (12) oder die genannten Ebenen (12, 22) kreisförmige Platten bzw. Platinen sind.

11. Antikollisionslicht gemäss einem der Ansprüche 1 bis 8, wobei die Reflektionsmittel (36, 46) oberhalb der genannten Ebene (32) oder der genannten Ebenen (32, 42) parabolisch geformt und mit zwei separaten Rändern (38, 48), die sich von der genannten Ebene (32) bzw. den genannten Ebenen (32, 42) erstrecken, und mit einem äusseren Rand (49), der U-förmig ist, versehen sind.

12. Antikollisionslicht gemäss Anspruch 11, wobei die genannte Ebene (32) oder die genannten Ebenen (32, 42) Platten bzw. Platinen mit einem U-förmigen Rand (50) sind, der sich von einer linearen Basis (51) erstreckt.

13. Antikollisionslicht gemäss einem der Ansprüche 1 bis 12, wobei die Leuchtdioden linsenlos sind.

14. Antikollisionslicht gemäss einem der Ansprüche 1 bis 13, wobei die Leuchtdioden (13) von einer lichttransparenten Masse (52), insbesondere von einer giessbaren Silikonmasse, bedeckt sind.

15. Antikollisionslicht gemäss Anspruch 14, wobei die genannten Reflektionsmittel (15, 25), die um die genannten Leuchtdioden herum angeordnet sind, und insbesondere das genannte dritte bzw. vierte Reflektionsmittel einen Rahmen für die genannte Masse bildet.

16. Antikollisionslicht gemäss Anspruch 2, wobei eine Halterung (11) für die genannten Rücken-an-Rücken stehenden Ebenen vorgesehen ist, welche durch die genannte Halterung beabstandet sind.

17. Antikollisionslicht gemäss einem der Ansprüche 2 bis 16, wobei die genannten Ebenen und die genannten Reflektionsmittel oberhalb der genannten Ebenen entlang einer gemeinsamen longitudinalen Achse angeordnet und insbesondere auf derselben Achse wie eine Fassung (4, 5) des Antikollisionslichts angeordnet sind.

18. Antikollisionslicht gemäss einem der Ansprüche 2 bis 17, wobei die genannten Ebenen und die genannten Reflektionsmittel oberhalb der genannten Ebene entlang einer gemeinsamen Achse angeordnet und innerhalb eines U-förmigen Trägers (60) angeordnet sind.

19. Antikollisionslicht gemäss einem der Ansprüche 1 bis 18, wobei die Leuchtdioden und eine Platine (6) für den elektrischen Versorgungskreis der Leuchtdioden innerhalb des Gehäuses des Antikollisionslichts (2, 3) angeordnet sind und insbesondere die Platine koplanar zu der Ebene (12) bzw. den Ebenen (12, 22) angeordnet ist.

## Revendications

1. Feu anticollision (1) pour aéronef comprenant un certain nombre de premières diodes électroluminescentes (13) agencées sur un plan commun (12) et un moyen de réflexion (16) agencé au-dessus du plan pour réfléchir l'émission de lumière provenant des diodes électroluminescentes de manière essentiellement perpendiculaire audit plan dans une direction latérale, dans lequel le moyen de réflexion (16) est un réflecteur commun à plusieurs ou à toutes les diodes électroluminescentes et dans lequel le plan (12) est une carte de circuit imprimé sur laquelle sont directement montées des puces de diode électroluminescente, **caractérisé en ce que** certaines ou toutes les premières diodes électroluminescentes (13) sont entourées par un moyen de réflexion supplémentaire (15) appartenant au premier nombre de diodes électroluminescentes (13), dirigeant la lumière émise latéralement par la diode électroluminescente ou les diodes dans une direction essentiellement perpendiculaire audit plan (12), dans lequel ledit moyen de réflexion supplémentaire (15) est monté sur le plan de sorte que chaque première diode électroluminescente (13) possède son propre réflecteur (15) qui constitue en même temps un cadre pour verser une masse transparente (52).

2. Feu anticollision selon la revendication 1 comprenant un deuxième plan (22) commun à un deuxième nombre de diodes électroluminescentes (23) agencées sur celui-ci, les premier et deuxième plans (12, 22) étant agencés de manière essentiellement coplanaire d'une manière opposée dos à dos, et un deuxième moyen de réflexion (26) agencé au-dessus du deuxième plan pour réfléchir l'émission de lumière provenant des diodes électroluminescentes du deuxième nombre de diodes électroluminescentes de manière essentiellement perpendiculaire au deuxième plan dans une direction latérale, et en particulier dans lequel le deuxième moyen de réflexion (26) est un réflecteur commun à plusieurs ou à toutes les diodes électroluminescentes dudit deuxième nombre de diodes électroluminescentes.

3. Feu anticollision selon la revendication 2, dans lequel le deuxième plan (22) est une carte de circuit imprimé sur laquelle sont directement montées des puces de diode électroluminescente.

4. Feu anticollision selon la revendication 2, dans lequel certaines ou toutes les diodes électroluminescentes du deuxième nombre de diodes (23), ou groupes de plusieurs desdites diodes électroluminescentes, sont entourées par un moyen de réflexion supplémentaire (25) appartenant audit deuxième nombre de diodes électroluminescentes (23), dirigeant la lumière émise latéralement par la diode électroluminescente ou les diodes dans une direction essentiellement perpendiculaire audit plan (22).

5. Feu anticollision selon la revendication 4, dans lequel ledit moyen de réflexion supplémentaire (25) pour ledit deuxième nombre de diodes électroluminescentes (23) est monté sur le deuxième plan (22).

6. Feu anticollision selon la revendication 4 ou 5, respectivement, dans lequel lesdits moyens de réflexion supplémentaires (15, 25) sont des parties en forme d'anneau comportant des trous avec des parois latérales réfléchissantes resserrées, les trous étant agencés en correspondance avec les positions desdites diodes électroluminescentes sur ledit plan ou lesdits plans, respectivement.

7. Feu anticollision selon l'une des revendications 1 à 6, dans lequel les diodes électroluminescentes sont agencées le long d'une ligne fermée sur le plan ou les plans, respectivement, en particulier dans un cercle, ou sont agencées le long d'une ligne ouverte sur ledit plan ou lesdits plans, respectivement, en particulier sous la forme d'un fer à cheval, ou sont agencées sous la forme d'une matrice.

8. Feu anticollision selon l'une des revendications 1 à 7, dans lequel un autre moyen de réflexion supplémentaire (17) est prévu par une couche réfléchissante sur le plan (12) ou les plans (12, 22), respectivement, pour certaines ou pour chacune desdites diodes électroluminescentes, respectivement.

9. Feu anticollision selon l'une des revendications 1 à 8, dans lequel lesdits moyens de réflexion (16, 26) au-dessus dudit plan (12) ou desdits plans (12, 22) sont de forme parabolique et sont dotés d'un rebord extérieur circulaire (16').

10. Feu anticollision selon la revendication 9, dans lequel ledit plan (12) ou lesdits plans (12, 22) sont des plaques ou des cartes de circuit imprimé circulaires, respectivement.

11. Feu anticollision selon les revendications 1 à 8, dans lequel lesdits moyens de réflexion (36, 46) au-dessus dudit plan (32) ou desdits plans (32, 42) sont de forme parabolique et sont dotés de deux rebords séparés (38, 48) s'étendant depuis ledit plan (32) ou lesdits plans (32, 42), respectivement, et d'un rebord extérieur (49) qui est en forme de U.

12. Feu anticollision selon la revendication 11, dans lequel ledit plan (32) ou lesdits plans (32, 42) sont des plaques ou cartes de circuit imprimé, respectivement, avec un rebord en forme de U (50) s'étendant depuis une base linéaire (51).

13. Feu anticollision selon l'une des revendications 1 à 12, dans lequel les diodes électroluminescentes ne comportent pas de lentille.

14. Feu anticollision selon l'une des revendications 1 à 13, dans lequel les diodes électroluminescentes (13) sont recouvertes d'une masse transparente à la lumière (52), en particulier d'une masse de silicone versable.

15. Feu anticollision selon la revendication 14, dans lequel lesdits moyens de réflexion (15, 25) agencés autour desdites diodes électroluminescentes, et en particulier lesdits troisième ou quatrième moyens de réflexion, respectivement, forment un cadre pour ladite masse.

16. Feu anticollision selon la revendication 2, dans lequel un support (11) est prévu pour lesdits plans opposés dos à dos, qui sont espacés par ledit support.

17. Feu anticollision selon l'une des revendications 2 à 16, dans lequel lesdits plans et lesdits moyens de réflexion au-dessus desdits plans sont agencés le long d'un axe longitudinal commun et en particulier dans le même axe qu'une douille (4, 5) du feu anticollision.

18. Feu anticollision selon l'une des revendications 2 à 17, dans lequel lesdits plans et lesdits moyens de réflexion au-dessus desdits plans sont agencés le long d'un axe commun et placés dans un support en forme de U (60).

19. Feu anticollision selon l'une des revendications 1 à 18, dans lequel les diodes électroluminescentes et une carte de circuit imprimé (6) pour le circuit d'alimentation électrique des diodes électroluminescentes sont agencées dans le boîtier du feu anticollision (2, 3) et en particulier la carte de circuit imprimé est agencée de manière coplanaire au plan (12) ou aux plans (12, 22), respectivement.
